# EUROPEAN PATENT SPECIFICATION

(11) **EP 0 557 106 B1**
(45) Date of publication and mention of the grant of the patent: **03.02.1999**
(21) Application number: 93301215.5
(22) Date of filing: 19.02.1993
(51) Int. Cl.: H01L 41/09

(54) **Ultrasonic driving motors**
Ultraschallgetriebener Motor
Moteur de commande ultrasonic

(30) Priority: 21.02.1992 JP 72569/92; 25.02.1992 JP 73601/92; 25.02.1992 JP 73602/92
(43) Date of publication of application: 25.08.1993
(73) Proprietor: HONDA ELECTRONICS CO., LTD., Toyohashi-shi, Aichi-ken (JP)
(72) Inventor: Honda, Keisuke, Toyohashi-shi, Aichi-ken (JP)
(74) Representative: Gordon, Michael Vincent

(56) References cited:
- EP-A- 301 429
- EP-A- 301 430
- PATENT ABSTRACTS OF JAPAN vol. 12, no. 130 (E-603)21 April 1988 & JP-A-62 254 666 ( MURATA MFG CO LTD ) 6 November 1987
- PATENT ABSTRACTS OF JAPAN vol. 13, no. 53 (E-713)7 February 1989 & JP-A-63 245 283 ( MURATA MFG CO LTD ) 12 October 1988
- PATENT ABSTRACTS OF JAPAN vol. 10, no. 259 (E-434)4 September 1986 & JP-A-61 085 078 ( NGK SPARK PLUG CO ) 30 April 1986
- PATENT ABSTRACTS OF JAPAN vol. 13, no. 51 (E-712)6 February 1989 & JP-A-63 242 181 ( HITACHI MAXELL LTD ) 7 October 1988

## Description

The present invention relates to improvements in ultrasonic driving motors.

An ultrasonic driving motor is known with its stator comprising a piezoelectric vibrator having electrodes divided in two on both sides thereof, the divided lines of the electrodes on both sides being shifted slightly, such that when AC power is applied to selected ones of the electrodes on both sides of the piezoelectric vibrator, a progressive wave is generated on the edge face and the side faces of the piezoelectric vibrator (see US patent 4945275 and Japanese patent appln. 64-30477).

Another motor of this type described in EP-A-0301429 includes a stator consisting of a piezoelectric vibrator having plural electrodes on both sides, the piezo-electric vibrator being fixed in a case, and a rotor comprising a ring frame associated with plural slides which contact an edge face of the piezo-electric vibrator. In this ultrasonic driving motor, because its rotor is contacted with the electrodes on the piezoelectric vibrator by the press of a spring, the electrodes are quickly worn by the rotor. Also, if the electrodes are prevented from wear by mounting a cover on the electrodes, because the rotor is worn by the rotation thereof, the pressure between the piezoelectric vibrator and the rotor is changed and the ultrasonic driving motor cannot be driven for a long time.

An ultrasonic driving motor according to the present invention is defined in claim 1.

The rotor has inherent springiness. In one arrangement, the ring frame has a separated portion.

In different arrangements for removing power from the ultrasonic driving motor:
a gear is attached to the ring frame and the gear is engaged with another gear;
a supporting member is fixed to, and extends across the centre of, the ring frame and a rotary shaft is fixed to the supporting member;
a friction member attached to the periphery of the ring frame, or a rubber ring pressed on the periphery of the ring frame, is contacted with a rotary member and a rotary power is taken out of a rotary shaft for the rotary member; or
a friction member attached to the periphery of the ring frame, or a rubber ring pressed on the periphery of the ring frame, is contacted with a linearly movable member which is linearly moved by the rotation of the ring frame.

Preferably, the piezoelectric vibrator is of a thickness in the range lmm to 1.5mm.

Preferably the piezo-electric vibrator is of ring-type presenting a central hole and is fixed in the case by inserting a projection of the case into said central hole.

Several embodiments of an ultrasonic driving motor, in accordance with the present invention, will now be described in greater detail, by way of example only, with reference to the accompanying drawings in which:-
Fig. 1 shows a plan view of an ultrasonic driving motor in an embodiment according to the present invention;
Fig. 2 shows a side sectional view of the ultrasonic driving motor in Fig. 1;
Fig. 3 shows a plan view of another embodiment according to the present invention;
Fig. 4 shows a side sectional view of the ultrasonic driving motor in Fig. 3;
Fig. 5 shows a plan view of another embodiment according to the present invention;
Fig. 6 shows a side sectional view of the ultrasonic driving motor in Fig. 5;
Fig. 7 shows a plan view of another embodiment according to the present invention;
Fig. 8 shows a side sectional view of the ultrasonic driving motor in Fig. 7;
Fig. 9 shows a plan view of another embodiment according to the present invention;
Fig. 10 shows a side sectional view of the ultrasonic driving motor in Fig. 9;
Fig. 11 shows a plan view of another embodiment according to the present invention;
Fig. 12 shows a side sectional view of the ultrasonic driving motor in Fig. 11;
Fig. 13 shows a plan view of another embodiment according to the present invention;
Fig. 14 shows a side sectional view of the ultrasonic driving motor in Fig. 12;
Fig. 15 shows a plan view of another ultrasonic driving motor;
Fig. 16 shows a side sectional view of the ultrasonic driving motor in Fig. 15;
Fig. 17 shows a plan view of another ultrasonic driving motor;
Fig. 18 shows a side sectional view of the ultrasonic driving motor in Fig. 17;
Fig. 19 shows a plan view of another ultrasonic driving motor;
Fig. 20 shows a side sectional view of the ultrasonic driving motor in Fig. 19;
Fig. 21 shows a plan view of another ultrasonic driving motor; and
Fig. 22 shows a side sectional view of the ultrasonic driving motor in Fig. 21.

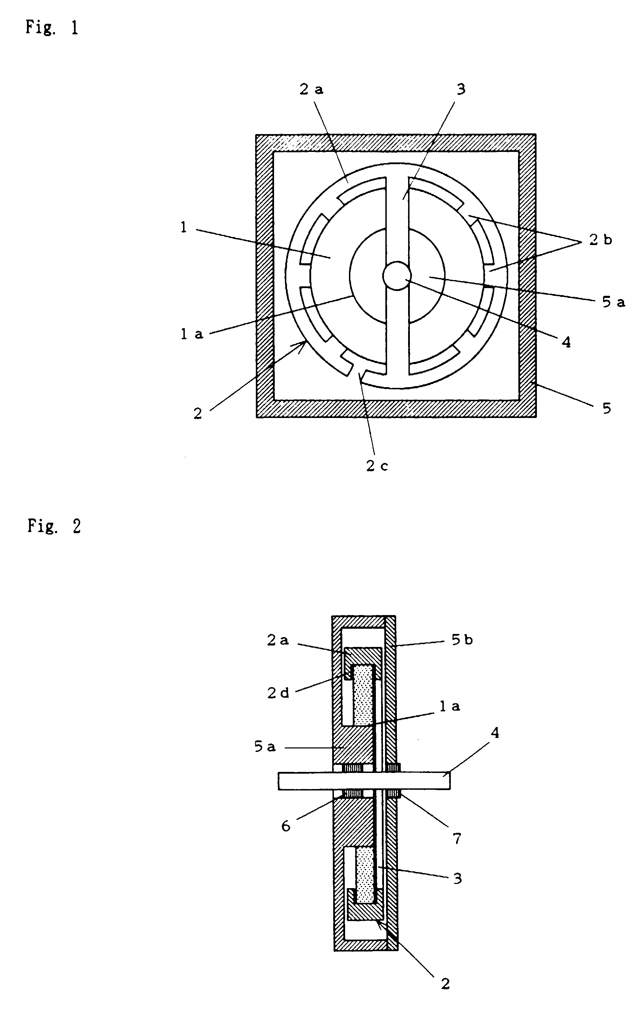

Referring to Fig. 1, a rotor 2 consists of a resilient ring frame 2a having plural slide projections 2b extending inwardly therefrom. One portion 2c of the ring frame 2a is separated (split) and the ring frame 2a is mounted and pressed on the edge of a thin ring-type (annular) piezoelectric vibrator 1 by opening the separated portion 2c. Guides 2d are attached to a diametrically opposed pair of the opposed slide projections 2b, because the slide projections 2b are not to slip off the thin ring-type piezoelectric vibrator 1.

The ring frame 2a is made of a metal or a plastics material (e.g. nylon).

A supporting member 3 is attached to a pair of the opposed guides 2d to extend over the centre of the thin ring-type piezoelectric vibrator 1 and a rotary shaft 4 is fixed to the supporting member 3.

The ring-type piezoelectric vibrator 1 is fixed in a case 5 by inserting a projection 5a of the case 5 into the hole 1a of the piezoelectric vibrator 1, and the rotary shaft 4 is supported to rotate by a bearing 6 attached to a centre hole of the projection 5a of the case 5 and a bearing 7 attached to a case cover 5b in alignment with the bearing 6.

In the ultrasonic driving motor of the present embodiment, as shown in the above-numbered patents, when one of two electrodes formed on one side of the piezoelectric vibrator 1 and one of two electrodes formed on the other side of the piezoelectric vibrator 1 are connected to AC power, a progressive wave progressing one way is generated on the edge portion and the side portions of the piezoelectric vibrator. When one of the two electrodes formed on the one side of the piezoelectric vibrator 1 and the other of the two electrodes formed on the other side of the piezoelectric vibrator 1 are connected to the AC power, a progressive wave progressing the opposite way is generated on the edge portion and the side portions of the piezoelectric vibrator. Accordingly, the rotor 2 is rotated one way or the opposite way by the progressive wave.

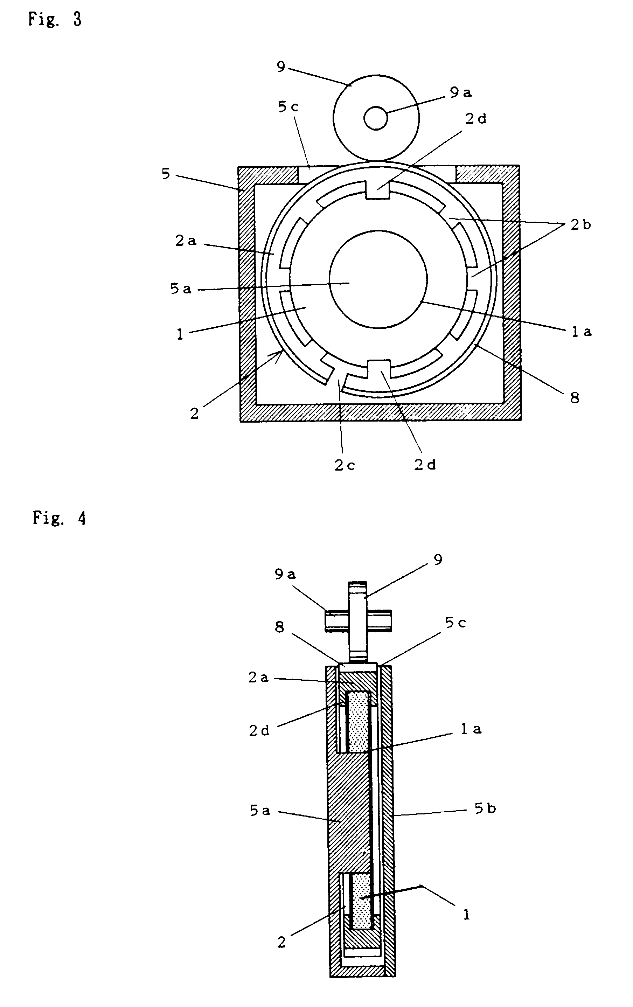

Referring to Figs. 3 and 4, a piezoelectric vibrator 1, a rotor 2 and a case 5 are the same as those of the above embodiment and are not explained. In this embodiment, friction material 8 having a split is attached to the ring frame 2a of the rotor 2, one portion of the ring frame 2a is projected from a hole 5c of the case 5 and the friction material 8 is contacted with a rotary member 9 supported by a shaft 9a.

In the ultrasonic driving motor of the present embodiment, when the rotor 2 is rotated, the rotary member 9 contacted by the friction material 8 is rotated and a rotary power is taken from the shaft 9a.

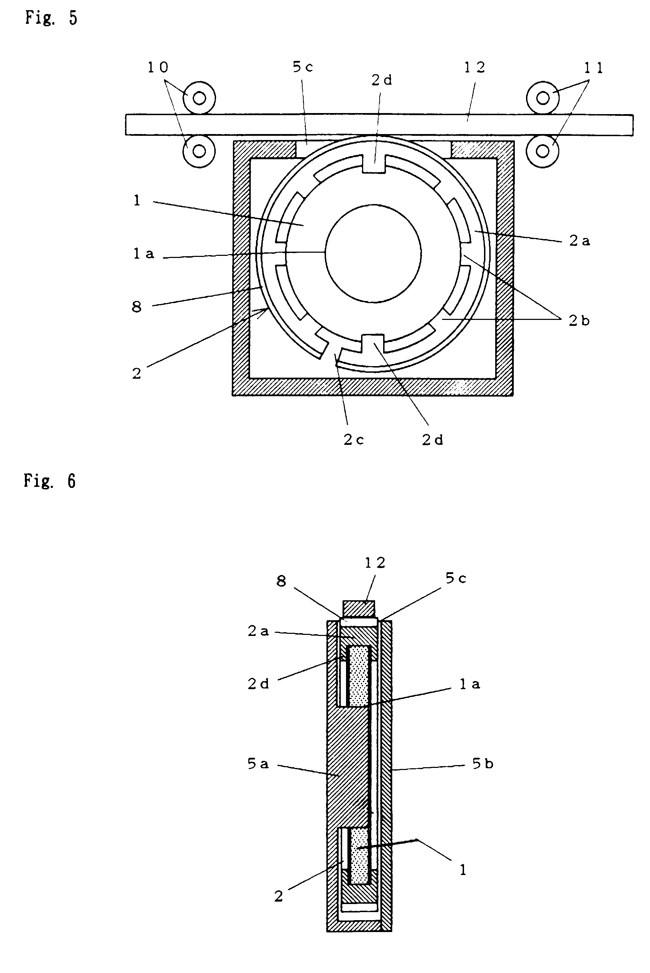

Referring to Figs. 5 and 6, a piezoelectric vibrator 1, a rotor 2, a case 5 and a friction member 8 are the same as those of the above embodiment and are not explained. In this embodiment, one portion of the ring frame 2a is projected from the hole 5c of the case 5 and the friction material 8 is contacted with a moving member 12 supported by supporting rollers 10 and 11.

In the ultrasonic driving motor of the present embodiment, when the rotor 2 is rotated, the moving member 12 contacted by the friction member 8 is linearly moved. Accordingly, a position control is performed by this ultrasonic driving motor.

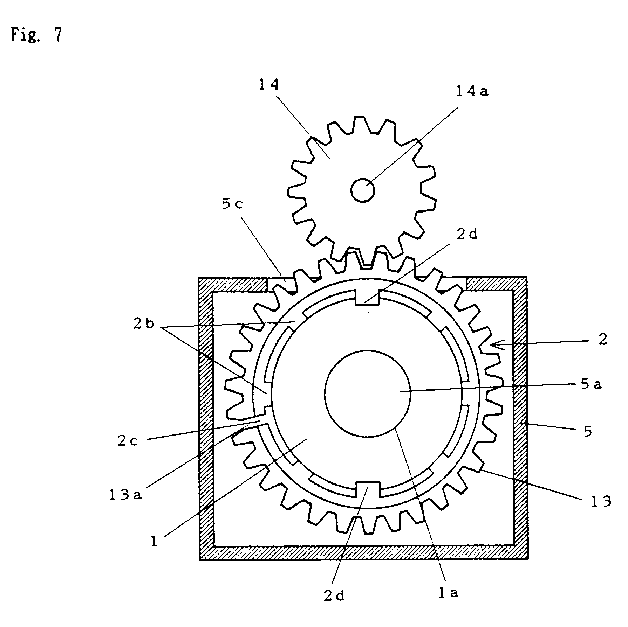

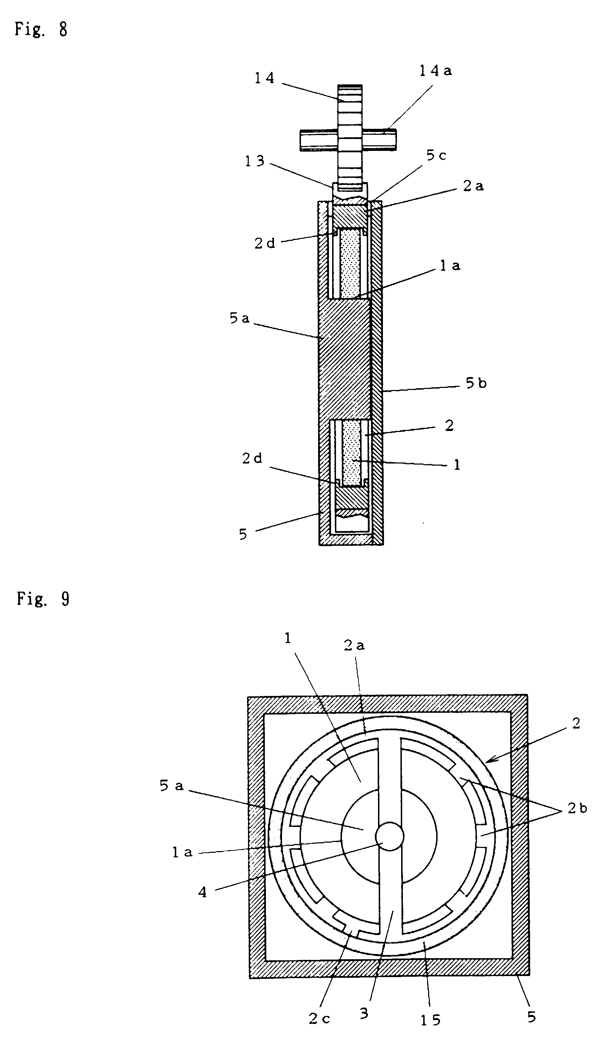

Referring to Figs. 7 and 8, a piezoelectric vibrator 1, a rotor 2 and a case 5 are the same as those of the above embodiments and are not explained. In this embodiment, a gear 13 is attached to the ring frame 2a by the provision of a separated portion 13a formed in the gear 13 in the same position as the separated portion 2c of the ring frame 2a. One portion of the gear 13 is projected from the hole 5c of the case 5 and is engaged with a gear 14 supported by a shaft 14a.

In the ultrasonic driving motor of the present embodiment, when the rotor 2 with the gear 13 is rotated, the gear 14 engaged with the gear 13 is rotated and a rotary power is taken out of the shaft 14a.

In Fig. 7, the gear 13 attached to the ring frame 2a is resilient, when the opening formed by the separated portion 2c is large, and the rotation of the gear 13 is near 360°.

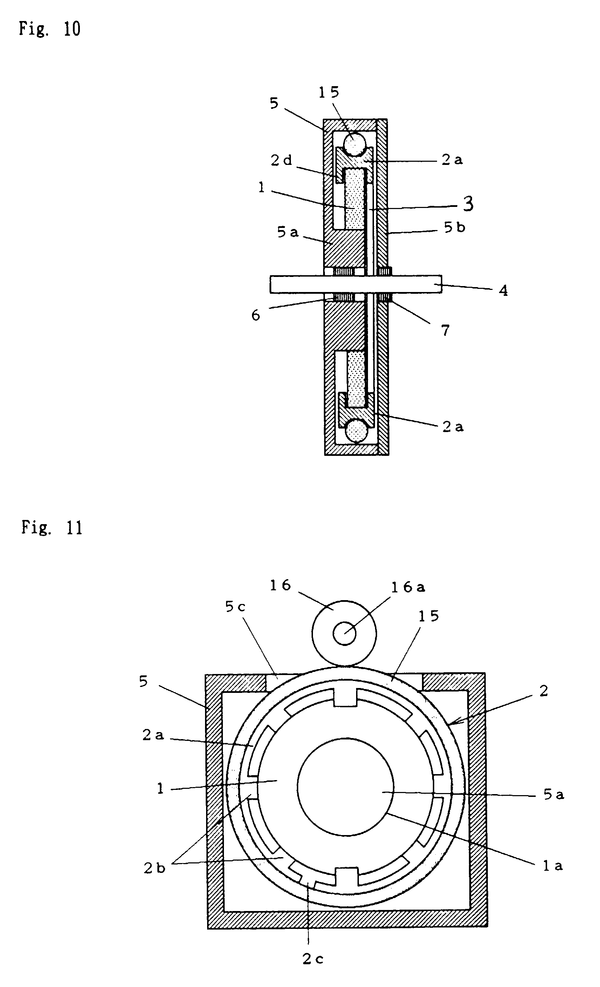

Referring to Figs. 9 and 10, a piezoelectric vibrator 1, a rotor 2, a ring frame 2a, slide projections 2b, a separated portion 2c, guides 2d, a supporting member 3, a rotary shaft 4, a case 5, a projection 5a and a case cover 5b are the same as those of Fig. 1 and are not explained. In this embodiment, a rubber ring 15 constituting a resilient member is mounted on the periphery of the ring frame 2a to press the ring frame 2a.

In the ultrasonic driving motor of the present embodiment, when the rotor 2 is rotated, rotary power is taken out of the rotary shaft 4.

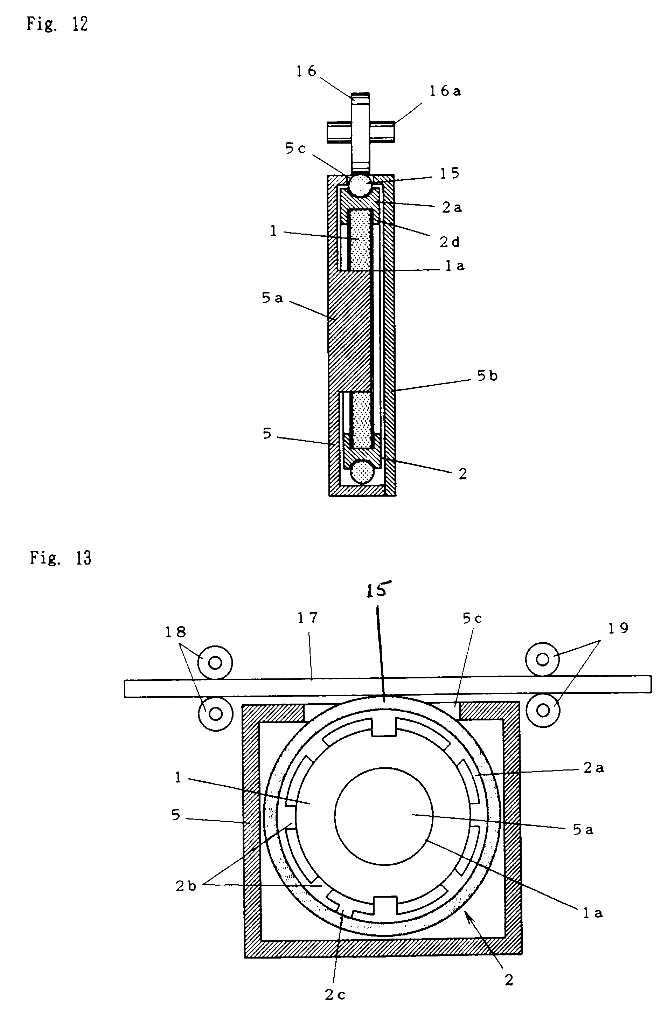

Referring to Figs. 11 and 12, a piezoelectric vibrator 1, a rotor 2, a ring frame 2a, slide projections 2b, a separated portion 2c, guides 2d, a case 5, a projection 5a and a case cover 5b are the same as those of Fig. 3 and are not explained. In this embodiment, one portion of a rubber ring 15 is projected from the hole 5c of the case 5, and a rotary member 16 supported by a rotary shaft 16a is contacted with the rubber ring 15.

In the ultrasonic driving motor of the present embodiment, when the rotor 2 with the rubber ring 15 is rotated, the rotary member 16 contacted by the rubber ring 15 is rotated and a rotary power is taken out of the rotary shaft 16a.

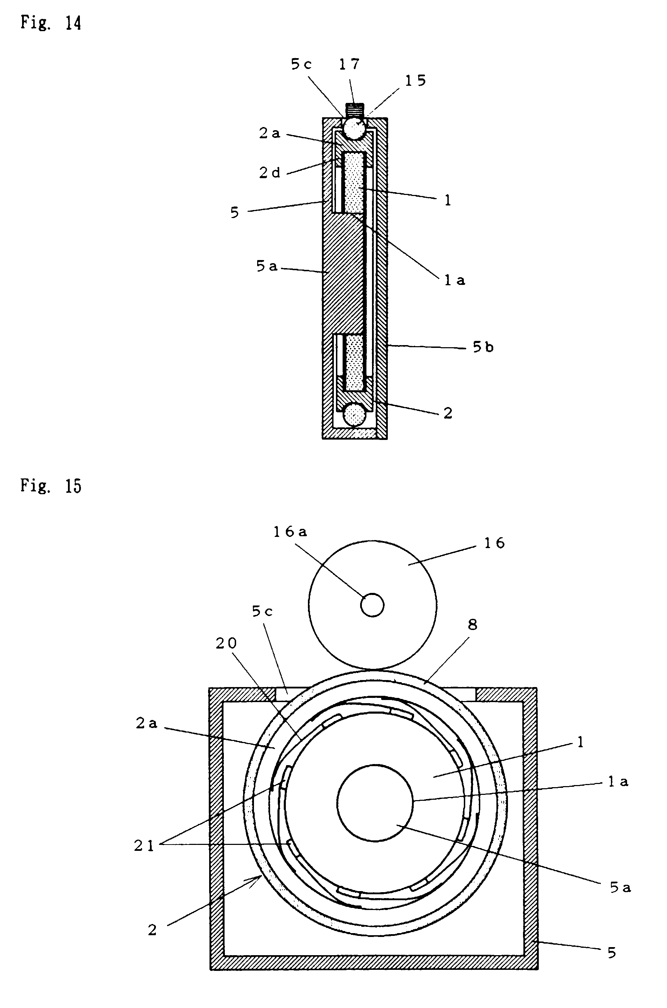

Referring to Figs. 13 and 14, a piezoelectric vibrator 1, a rotor 2, a ring frame 2a, slide projections 2b, a separated portion 2c, guides 2d, a case 5, a projection 5a, a case cover 5b and a rubber ring 15 are the same as those of Fig. 11 and are not explained. In this embodiment, one portion of the rubber ring 15 is projected from the hole 5c of the case 5, and a moving member 17 supported by supporting rollers 18 and 19 is contacted by the rubber ring 15.

In the ultrasonic driving motor of the present embodiment, when the rotor 2 with the rubber ring 15 is rotated, the moving member 17 is linearly moved by the rotation of the rotor 2. Accordingly, a positioning control is performed by the moving member 17.

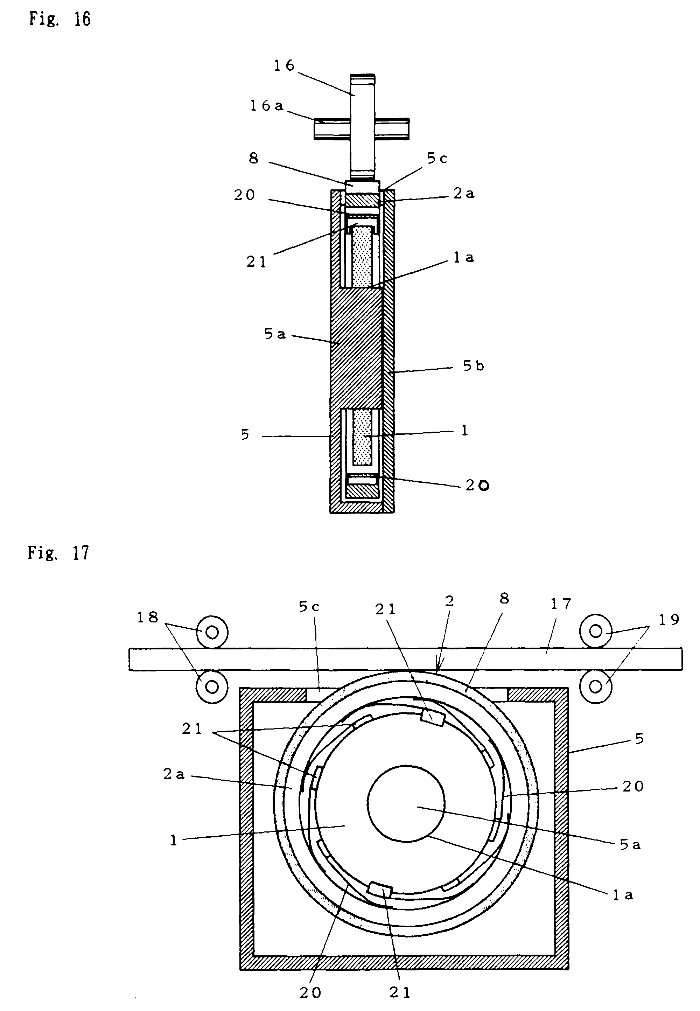

Referring to Figs. 15 and 16, a piezoelectric vibrator 1, a rotor 2, a ring frame 2a, a case 5, a projection 5a, a case cover 5b, a friction member 8, a rotary member 16 and a rotary shaft 16a are the same as those of Fig. 11 and are not explained. In this motor, one ends of a plurality of leaf springs 20 are attached to the ring frame 2a, the other ends of the leaf springs 20 are attached to a plurality of slide members 21 and the slide members 21 are contacted with the edge face of the piezoelectric vibrator.

In this ultrasonic driving motor, when AC power is supplied to the piezoelectric vibrator 1, the slide members 21 of the rotor 2 are moved on the edge of the piezoelectric vibrator 1, the rotor 2 with the friction member 8 is rotated and the rotary member 16 is rotated. Therefore, a rotary power is taken out of the rotary shaft 16a.

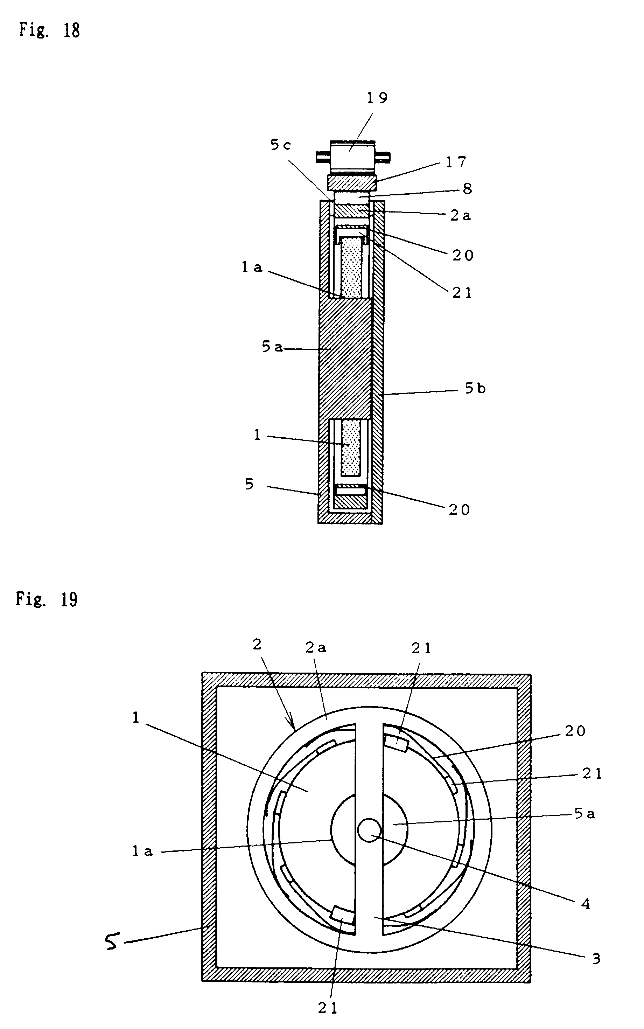

Referring to Figs. 17 and 18, a piezoelectric vibrator 1, a rotor 2, a ring frame 2a, a case 5, a projection 5a, a case cover 5b, a friction member 8, leaf springs 20 and slide members 21 are the same as those of Fig. 15 and are not explained. In this motor, one portion of the friction member 8 is projected from the hole 5c of the case 5 and contacts moving member 17 supported by supporting rollers 18 and 19.

In this ultrasonic driving motor, when the rotor 2 is rotated, the moving member 17 contacted by the friction member 8 is linearly moved by the rotation of the rotor 2. Accordingly, a positioning control is performed by the moving member 17.

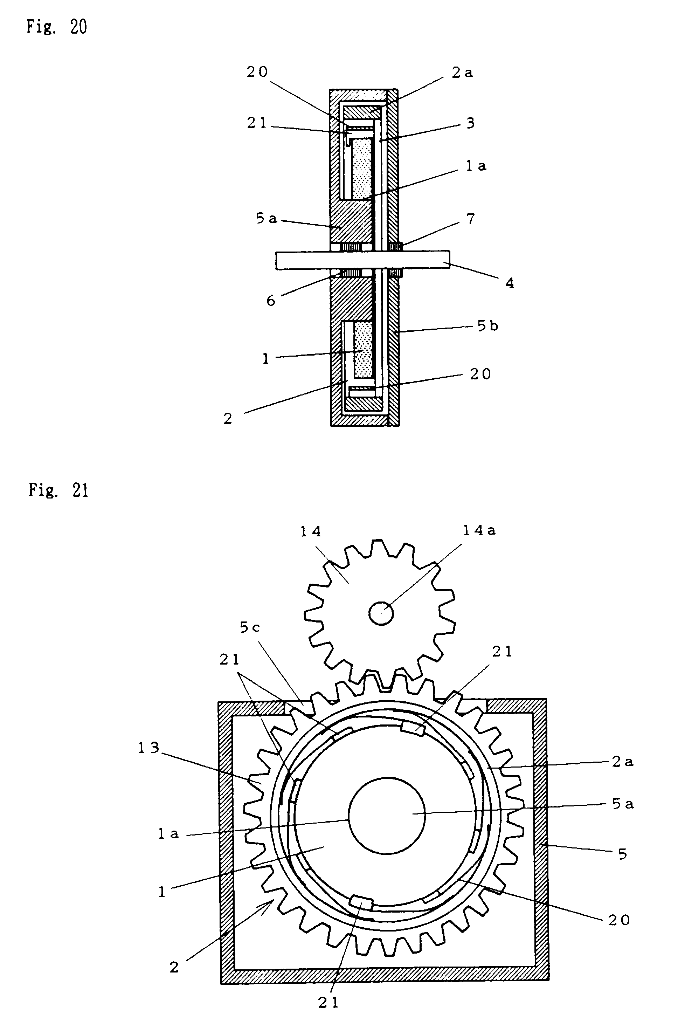

Referring to Figs. 19 and 20, a piezoelectric vibrator 1, a rotor 2, a ring frame 2a, a case 5, a projection 5a, a case cover 5b, leaf springs 20 and slide members 21 are the same as those of the above motors and are not explained. In this motor, bearings 6 and 7 are attached to the case projection 5a and case cover 5b, a rotary shaft 4 is supported by the bearings 6 and 7 and the rotary shaft 4 is fixed to a supporting member 3, the ends of which are fixed to the ring frame 2a.

In this ultrasonic driving motor, when the rotor 2 is rotated, the rotary shaft 4 is rotated and a rotary power is taken out of the rotary shaft 4.

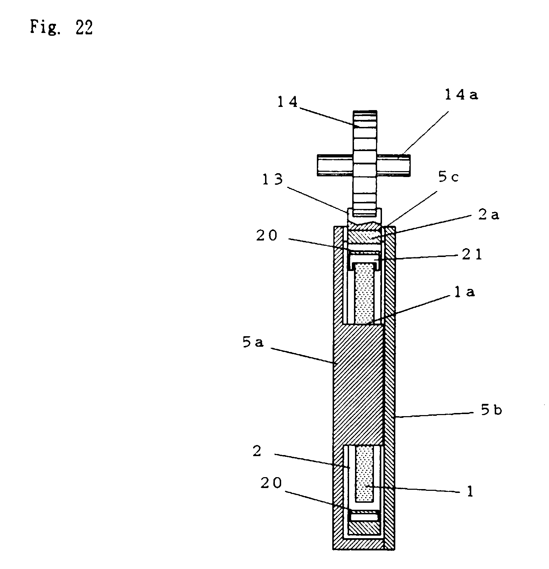

Referring to Figs. 21 and 22, a piezoelectric vibrator 1, a rotor 2, a ring frame 2a, a case 5, a projection 5a, a case cover 5b, leaf springs 20 and slide members 21 are the same as those of the above embodiments and are not explained. In this motor, a gear 13 is fixed to the rotor 2, one portion of the gear 13 is projected from the hole 5c of the case 5 and a gear 14 supported by a rotary shaft 14a is engaged with the gear 13.

In this ultrasonic driving motor, when the rotor 2 with the gear 13 is rotated, the gear 14 engaged with the gear 13 is rotated. Therefore, rotary power is taken out of the rotary shaft 14a.

The ultrasonic driving motor of the present invention can be formed to be very thin and compact, because the thickness of the piezoelectric vibrator 1 can be 1mm to 1.5mm. Also, the ultrasonic driving motor of the present invention is instantaneously stopped when the AC power is cut, and it is thus not necessary to have a brake. This is particulary useful when used for control apparatus, such as controlling the volume of sound apparatus.

## Claims

1. An ultrasonic driving motor including a stator consisting of a piezoelectric vibrator (1) having plural electrodes on both sides, the piezo-electric vibrator being fixed in a case (5), and a rotor (2) comprising a ring frame (2a) associated with plural slides (2b; 21) which contact an edge face of the piezo-electric vibrator, characterised in that the ring frame (2a) is resilient, and has a plurality of slide projections (2b) which contact the edge face of the piezo-electric vibrator.

2. An ultrasonic driving motor according to claim 1, in which the ring frame (2a) includes a separated portion (20),

3. An ultrasonic driving motor according to claim 2, in which a rubber ring (15) is pressed on the periphery of the ring frame (2a).

4. An ultrasonic driving motor according to any one of claims 1 to 2, in which a gear (13) is attached to the ring frame (2a) and the gear is engaged with another gear (14).

5. An ultrasonic driving motor according to any one of claims 1 to 3, in which a supporting member (3) is fixed to, and extends across the centre of, the ring frame (2a) and a rotary shaft (4) is fixed to the supporting member.

6. An ultrasonic driving motor according to any one of claims 1 to 3, in which a friction member (8) attached to the periphery of the ring frame (2a), or the rubber ring (15) if present, is contacted with a rotary member (9, 16) and a rotary power is taken out of a rotary shaft (9a, 16a) for the rotary member.

7. An ultrasonic driving motor according to any one of claims 1 to 3, in which a friction member (8) attached to the periphery of the ring frame (2a), or the rubber ring (15) if present, is contacted with a linearly movable member (12, 17) which is linearly moved by the rotation of the ring frame (2a).

8. An ultrasonic driving motor according to any preceding claim, in which the piezoelectric vibrator (1) is of a thickness in the range lmm to 1.5mm.

9. An ultrasonic driving motor according to any preceding claim, in which the piezo-electric vibrator (1) is of ring-type presenting a central hole (1a) and is fixed in the case (5) by inserting a projection (5a) of the case (5) into said central hole (1a).

## Patentansprüche

1. Ultraschall-Antriebsmotor mit einem Stator, welcher sich aus einem piezoelektrischen Vibrator (1) mit mehreren Elektroden auf beiden Seiten, wobei der piezoelektrische Vibrator in einem Gehäuse (5) befestigt ist, und einem Rotor (2) mit einem ringförmigen Rahmen (2a), welchem mehrere Gleitelemente (2b; 21) zugeordnet sind, die eine Randfläche des piezoelektrischen Vibratos kontaktieren, zusammensetzt, dadurch gekennzeichnet, daß der ringförmige Rahmen (2a) elastisch ist und mehrere Gleitelementvorsprünge (2b) aufweist, welche die Randfläche des piezoelektrischen Vibrators kontaktieren.

2. Ultraschall-Antriebsmotor nach Anspruch 1, bei welchem der ringförmige Rahmen (2a) einen getrennten Teil (2c) aufweist.

3. Ultraschall-Antriebsmotor nach Anspruch 2, bei welchem ein Gummiring (15) auf dem Rand des ringförmigen Rahmens (2a) unter Druckausübung aufgebracht wird.

4. Ultraschall-Antriebsmotor nach einem der Ansprüche 1 bis 2, bei welchem ein Zahnrad (13) an dem nngförmigen Rahmen (2a) befestigt ist und dieses Zahnrad mit einem weiteren Zahnrad (14) in Eingriff kommt.

5. Ultraschall-Antriebsmotor nach einem der Ansprüche 1 bis 3, bei welchem ein Trägerelement (3) an dem ringförmigen Rahmen (2a) angebracht ist und sich über den Mittelpunkt desselben erstreckt und an dem Trägerelement eine Drehachse (4) befestigt ist.

6. Ultraschall-Antriebsmotor nach einem der Ansprüche 1 bis 3, bei welchem ein an dem Rand des nngförmigen Rahmens (2a) angebrachtes Reibungselement (8) bzw. der Gummiring (15), sofern vorhanden, ein Drehelement (9, 16) kontaktiert und einer Drehachse (9a, 16a) Drehkraft für das Drehelement entnommen wird.

7. Ultraschall-Antriebsmotor nach einem der Ansprüche 1 bis 3, bei welchem ein an dem Rand des ringförmigen Rahmens (2a) angebrachtes Reibungselement (8) bzw. der Gummiring (15), sofern vorhanden, ein linear bewegliches Element (12, 17), welches durch die Rotation des nngförmigen Rahmens (2a) linear bewegt wird, kontaktiert.

8. Ultraschall-Antriebsmotor nach einem der vorangegangenen Ansprüche, bei welchem der piezoelektrische Vibrator (1) eine Stärke von 1mm bis 1,5mm aufweist.

9. Ultraschall-Antriebsmotor nach einem der vorangegangenen Ansprüche, bei welchem der piezoelektrische Vibrator (1) ringförmig mit einer zentralen Bohrung (1a) ausgebildet und in dem Gehäuse (5) durch Einsetzen eines Vorsprungs (5a) des Gehäuses (5) in die zentrale Bohrung (1a) befestigt ist.

## Revendications

1. Moteur d'entraînement à ultrasons comprenant un stator constitué d'un vibreur piézo-électrique (1) comportant plusieurs électrodes sur les deux côtés, le vibreur piézo-électrique étant fixé dans un boîtier (5), et un rotor (2) comprenant une carcasse en anneau (2a) associée à plusieurs contacts de glissement (2b ; 21) qui viennent en contact avec une face de bord du vibreur piézo-électrique, caractérisé en ce que la carcasse en anneau (2a) est élastique et possède une pluralité de parties de glissement en saillie (2b) qui viennent en contact avec la face de bord du vibreur piézo-électrique.

2. Moteur d'entraînement à ultrasons selon la revendication 1, dans lequel la carcasse en anneau (2a) comprend une partie écartée (2c).

3. Moteur d'entraînement à ultrasons selon la revendication 2, dans lequel un anneau de caoutchouc (15) est pressé sur la périphérie de la carcasse en anneau (2a).

4. Moteur d'entraînement à ultrasons selon l'une quelconque des revendications 1 à 2, dans lequel un engrenage (13) est fixé à la carcasse en anneau (2a) et l'engrenage est en prise avec un autre engrenage (14).

5. Moteur d'entraînement à ultrasons selon l'une quelconque des revendications 1 à 3, dans lequel un élément de support (3) est fixé à la carcasse en anneau (2a) et s'étend en travers du centre de cette dernière, et un arbre rotatif (4) est fixé à l'élément de support.

6. Moteur d'entraînement à ultrasons selon l'une quelconque des revendications 1 à 3, dans lequel un élément de friction (8) fixé à la périphérie de la carcasse en anneau (2a), ou de l'anneau de caoutchouc (15) s'il est présent, est en contact avec un élément rotatif (9, 16) et on tire une puissance rotative d'un arbre rotatif (9a, 16a) pour l'élément rotatif.

7. Moteur d'entraînement à ultrasons selon l'une quelconque des revendications 1 à 3, dans lequel un élément de friction (8) fixé à la périphérie de la carcasse en anneau (2a), ou de l'anneau de caoutchouc (15) s'il est présent, est en contact avec un élément mobile de façon linéaire (12, 17) qui se déplace de façon linéaire par la rotation de la carcasse en anneau (2a).

8. Moteur d'entraînement à ultrasons selon l'une quelconque des revendications précédentes, dans lequel le vibreur piézo-électrique (1) a une épaisseur comprise entre 1 mm et 1,5 mm.

9. Moteur d'entraînement à ultrasons selon l'une quelconque des revendications précédentes, dans lequel le vibreur piézo-électrique (1) est du type en anneau présentant un trou central (la) et est fixé dans le boîtier (5) en insérant une partie en saillie (5a) du boîtier (5) dans ledit trou central (1a).
